# FASCICULE DE BREVET EUROPEEN

(11) **EP 4 056 420 B1**
(45) Date de publication et mention de la délivrance du brevet: **22.11.2023**
(21) Numéro de dépôt: 22161609.7
(22) Date de dépôt: 11.03.2022
(51) Int. Cl.: B60P 7/08, F16G 15/06

(54) **SYSTEME D'ACCROCHAGE POUR CHAINE A MAILLONS ET PROCEDES CORRESPONDANTS**
EINHÄNGESYSTEM FÜR GLIEDERKETTEN UND ENTSPRECHENDE VERFAHREN
ATTACHMENT SYSTEM FOR A CHAIN WITH LINKS AND CORRESPONDING METHODS

(30) Priorité: 11.03.2021 FR 2102414
(43) Date de publication de la demande: 14.09.2022
(73) Titulaire: I.D.MAT (Industrie-Developpement-Materiel Technique), 79240 Vernoux-en Gâtine (FR)
(72) Inventeur: MERCERON, Lucas, 44430 LE LANDREAU (FR)
(74) Mandataire: Ipsilon

(56) Documents cités:
- GB-A- 1 405 513
- GB-A- 2 485 639
- US-B1- 10 458 460

## Description

### DOMAINE DE L'INVENTION

La présente invention concerne de manière générale les systèmes d'accrochage de chaîne à maillons. L'invention concerne plus particulièrement un système d'accrochage permettant de raccourcir la longueur utile d'une chaine à maillons et/ou d'accrocher plusieurs chaînes à maillons.

### ART ANTERIEUR

On connait de l'état de la technique un système d'accrochage permettant d'accrocher un maillon d'une chaîne. Le système d'accrochage comprend un corps principal qui est équipé d'une goupille, qui doit être repoussée pour laisser le passage à un maillon de la chaîne vers le fond de la gorge du corps principal, puis remise en position dans la gorge pour emprisonner le maillon.

Cependant un tel système d'accrochage connu de l'état de la technique est fastidieux à utiliser. En particulier ce système d'accrochage nécessite généralement la présence de deux personnes, l'une des personnes devant tenir le système d'accrochage d'une main et tirer la goupille de l'autre, et l'autre personne devant tenir la chaîne pour introduire le maillon dans le système d'accrochage. De même pour retirer la chaine, on observe qu'une personne est requise pour tenir la chaine et une autre pour dégager la goupille.

Le document GB1405513A décrit un dispositif d'accrochage selon le préambule de la revendication 1 comprenant un corps présentant une ouverture refermable par une goupille. Le déplacement de la goupille est actionnable par une poignée.

La présente invention a pour but de proposer un nouveau système d'accrochage permettant de pallier tout ou partie des problèmes exposés ci-dessus.

### RESUME DE L'INVENTION

A cet effet, l'invention a pour objet un système d'accrochage pour une chaine à maillons selon la revendication 1.

L'opérateur peut ainsi appuyer sur la gâchette pour déplacer le piton de verrouillage (ou goupille) au moyen d'un seul doigt, ce qui facilite le travail de l'usager. La gâchette peut se présenter sous la forme d'un bouton poussoir.

La forme du corps principal et de la gâchette sont ergonomiques. En effet, le corps principal et la gâchette sont agencés pour permettre à l'opérateur de saisir le corps principal, tout en actionnant la gâchette avec une seule main.

L'opérateur peut aussi faire passer la chaîne directement dans la gorge du crochet, la goupille se rétractant sous la poussée effectuée en sens d'entrée. Selon un aspect particulier, la gâchette et la zone de position du pouce de l'opérateur sur le corps principal sont situées d'un même côté par rapport à la gorge d'introduction du maillon pour faciliter la saisie du système d'accrochage.

Le système d'accrochage peut aussi comporter une ou plusieurs des caractéristiques suivantes prises dans toute combinaison techniquement admissible.

Selon un mode de réalisation, la gâchette est, lors de son actionnement manuel, déplaçable selon une direction inclinée par rapport à la direction de déplacement du piton.

Selon un mode de réalisation, une lumière est ménagée dans le piton, et le système comprend une goupille qui s'étend dans le corps principal et dans ou à travers ladite lumière pour former une butée de limitation de déplacement du piton et, de préférence, empêcher une rotation du piton autour de son axe.

Selon un mode de réalisation, le système comprend un ressort de rappel configuré pour rappeler le piton en position active.

Selon un mode de réalisation, le système de gâchette comprend un ressort de rappel permettant de rappeler la gâchette dans la première position.

Selon un mode de réalisation, le système comprend une butée de limitation de déplacement de la gâchette.

Selon un mode de réalisation, le corps principal comprend une partie, appelée ergot, dont la forme est adaptée pour permettre à l'opérateur de, avec une seule main, appuyer sur la gâchette, en positionnant un doigt, par exemple le pouce, sous l'ergot, et en positionnant un autre doigt, par exemple le majeur, sur la gâchette.

L'invention concerne également un procédé d'accrochage d'au moins un maillon d'une chaine à l'aide d'un système d'accrochage selon l'un quelconque des modes de réalisation proposés ci-dessus, le procédé comprend les étapes suivantes :
- déplacement du piton en position inactive et introduction d'un maillon dans la gorge, l'ouverture du maillon étant située en regard du piton ; et
- déplacement du piton en position active pour l'emprisonnement du maillon par rapport à la gorge.

L'invention concerne également un procédé de libération d'au moins un maillon d'une chaine, emprisonné dans une gorge d'un système d'accrochage selon l'un quelconque des modes de réalisation proposés ci-dessus, le procédé comprend le déplacement du piton en position inactive à l'aide de la gâchette, et la sortie du maillon par rapport à la gorge.

### BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :
- [Fig. 1] la Figure 1 est une vue en perspective éclatée d'un système d'accrochage selon un mode de réalisation de l'invention ;
- [Fig. 2] la Figure 2 est une vue en perspective éclatée d'un système d'accrochage selon un autre mode de réalisation de l'invention ;
- [Fig. 3] la Figure 3 est une vue de côté en coupe du système d'accrochage de la Figure 1 en position active du piton de verrouillage et au début de l'introduction d'un maillon dans la gorge du système d'accrochage ;

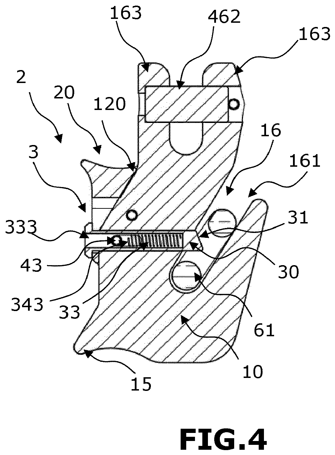

- [Fig. 4] la Figure 4 est une vue de côté en coupe du système d'accrochage de la Figure 1 en position active du piton de verrouillage à l'état verrouillé du maillon dans la gorge du système d'accrochage du fait du piton de verrouillage qui s'étend en position active à l'intérieur du maillon ;

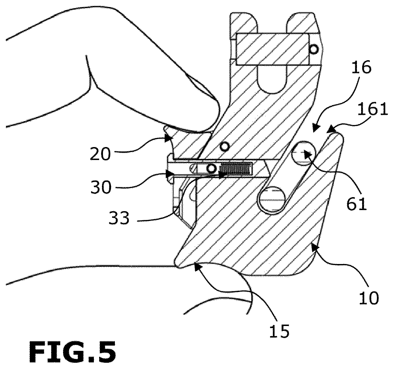

- [Fig. 5] la Figure 5 est une vue de côté en coupe du système d'accrochage de la Figure 1 à l'état pressé de la gâchette pour amener le piton de verrouillage en position inactive pour permettre de retirer le maillon de la gorge du système d'accrochage ;
- [Fig. 6] la Figure 6 est une vue de côté en coupe du système d'accrochage de la Figure 1 dans une position active du piton de verrouillage qui verrouille le maillon dans la gorge du système d'accrochage ; un autre maillon étant accroché à une chape du corps principal munie d'une goupille ;
- [Fig. 7] la Figure 7 est une vue en perspective d'un système d'arrimage d'un objet, par exemple sur une remorque, le système d'arrimage comprenant un système d'accrochage selon un mode de réalisation de l'invention, auquel sont accrochés un maillon d'une chaine et un maillon d'une autre chaine ;
- [Fig. 8] la Figure 8 est une vue de détail de la zone VIII de la Figure 7 montrant le système d'accrochage auquel sont couplés deux maillons ;
- [Fig. 9] la Figure 9 est une vue en perspective d'un système d'accrochage selon un mode de réalisation de l'invention, utilisé pour le levage d'une charge, un maillon d'une chaine étant fixé dans la gorge du système d'accrochage pour raccourcir la chaîne et un autre maillon d'une autre chaine étant fixé à la chape de fixation du système d'accrochage ;
- [Fig. 10] la Figure 10 est une vue de détail de la zone X de la Figure 9 montrant le système d'accrochage auquel sont couplés deux maillons.

### DESCRIPTION DETAILLEE

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en oeuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

En référence aux figures, il est proposé un système d'accrochage 1 pour une chaine 6 à maillons 61.

Le système d'accrochage 1 peut être utilisé par exemple pour le raccourcissement d'une chaine à maillons et/ou pour relier deux chaînes.

Le système d'accrochage 1 comprend un corps principal 10 qui présente une gorge 16 apte à recevoir un maillon 61 de la chaine 6.

### Mécanisme de verrouillage

Le corps principal 10 est muni d'un mécanisme 3 de verrouillage, qui comprend un élément appelé piton 30 de verrouillage. Le piton de verrouillage est déplaçable entre :
- une position inactive dans laquelle la position du piton 30 par rapport à la gorge 16 est telle que le passage 160 à l'intérieur de la gorge 16 est libéré pour permettre une introduction ou une sortie du maillon 61 par rapport à la gorge 16 ; et
- une position active dans laquelle la position du piton 30 par rapport à la gorge 16 est telle que le piton 30 de verrouillage réduit ou ferme le passage 160 à l'intérieur de la gorge 16, par rapport à la position inactive du piton, pour permettre d'emprisonner le maillon 61 par rapport à la gorge 16.

Le piton 30 permet d'emprisonner le maillon 61 pour l'empêcher de sortir de la gorge 16, lorsque le maillon 61 est à l'état introduit dans la gorge 16 dans une position où l'ouverture du maillon est située en regard du piton 30. En position active du piton 30, le piton 30 s'étend dans la gorge 16 et dans l'ouverture du maillon 61 formant ainsi une barrière empêchant la sortie du maillon par rapport à la gorge 16 du corps principal 10.

Autrement dit, en position active, le piton 30 fait saillie à l'intérieur de la gorge 16 du corps principal 10 destiné à recevoir le maillon 61 de chaine, de manière à fermer au moins partiellement le passage 160 à l'intérieur de la gorge 16. Ainsi, lorsque le maillon 61 de chaine est à l'intérieur de ladite gorge 16 du corps principal, et que le piton 30 est amené en position active en s'étendant dans l'ouverture du maillon, le piton 30 empêche la sortie du maillon de chaine par rapport au corps principal.

En position inactive, le piton 30 libère le passage dans la gorge 16, ce qui permet au maillon d'être sorti de la gorge ou introduit dans la gorge. Dans l'exemple illustré aux figures, en position inactive, le piton 30 s'étend à affleurement ou en retrait de la gorge 16 du corps principal destinée à recevoir un maillon de chaine pour permettre d'introduire et de sortir librement ledit maillon de chaine par rapport à la gorge 16 du corps principal.

L'extrémité 31 du piton 30 de verrouillage située du côté de la gorge 16 présente une face inclinée par rapport à l'axe de déplacement du piton 30. La normale à la face inclinée 31 du piton est orientée vers la zone d'ouverture 161 de la gorge 16.

La face inclinée de l'extrémité du piston forme ainsi une rampe, de sorte que lorsque l'opérateur introduit le maillon dans la gorge 16 et que le maillon appui contre la face inclinée du piton 30, selon une direction d'appui orientée depuis l'ouverture 161 de la gorge 16 vers le fond de la gorge 16, le piton 30 est déplacée, de préférence par coulissement, en position inactive. En particulier, le piton 30 est déplacé à l'intérieur d'un passage 130 traversant ménagé dans le corps principal 10, pour libérer le passage du maillon 61 vers le fond de la gorge 16.

Selon un aspect particulier, une lumière 343 est ménagée dans le piton 30. La lumière présente un passage d'un axe orthogonal à l'axe de déplacement du piton 30. Le système comprend une goupille 43 qui s'étend dans le corps principal 10 et dans ou à travers ladite lumière 343, et donc à travers le passage traversant 130 dans lequel s'étend le piton 30, pour former une butée de limitation de déplacement du piton. Avantageusement, la goupille 43 permet d'interdire toute rotation axiale du piton 30 sur lui-même.

Selon un mode de réalisation préféré, un ressort 33 de rappel est configuré pour rappeler le piton 30 en position active. En position inactive le ressort est compressé jusqu'à ce que le piton 30 arrive en butée sur la goupille 43 par contact avec la paroi intérieure de sa lumière 343. Dans l'exemple illustré aux Figures, le ressort de rappel 33 est situé dans une partie creuse 333, de préférence borgne, du piton 30 entre la goupille 43 et le fond de la partie creuse 333.

### Système de gâchette

Le corps principal 10 est aussi muni d'un système 2 de gâchette. Le système 2 de gâchette comprend une gâchette 20.

La gâchette 20 est manuellement actionnable pour entrainer le piton 30 en position inactive. La gâchette 20 est destinée à être sollicitée par la main de l'opérateur, par exemple l'index de l'opérateur. A cet effet, la partie supérieure de la gâchette 20 présente une forme courbe, de préférence concave, adaptée au positionnement d'un doigt de l'opérateur.

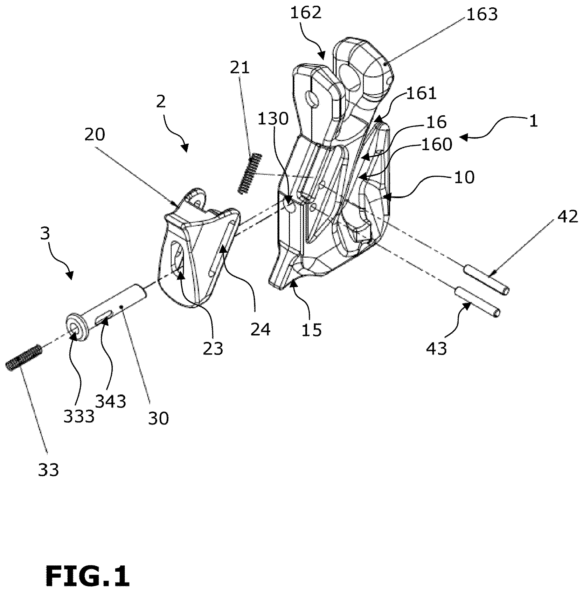

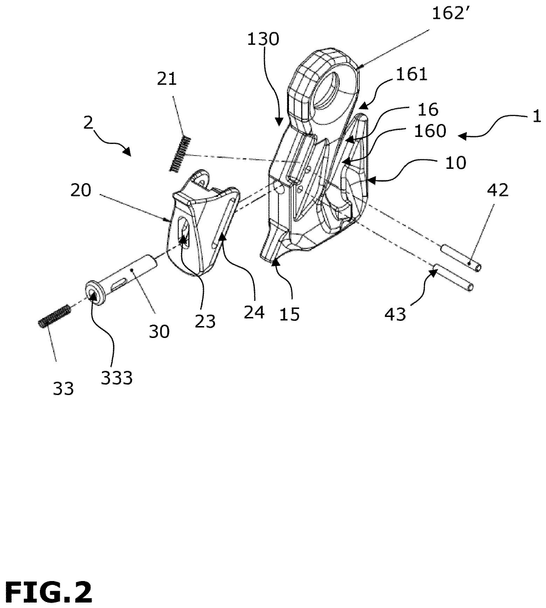

La gâchette 20 est couplée au piton 30 de verrouillage. Comme illustré plus particulièrement à la Figure 1 ou 2, un passage traversant 23 est ménagé dans la gâchette pour le passage du piton 30 de verrouillage. Avantageusement, le piton de verrouillage 30 présente une tête 32 de dimension supérieure à la largeur du passage traversant pour permettre à la gâchette d'appuyer sur cette tête lors du déplacement de la gâchette par appui de l'opérateur sur la gâchette. Ainsi, un déplacement de gâchette 20 entraine un déplacement du piton 30 de verrouillage.

La gâchette 20 est déplaçable depuis une première position dans laquelle le piton 30 est en position active, vers une deuxième position pour entrainer le piton 30 en position inactive. L'actionnement de la gâchette la déplace de la première position vers la deuxième position, de sorte que lors de ce déplacement la gâchette entraine le piton de sa position active à sa position inactive. La deuxième position de la gâchette 20 correspond à une position dans laquelle l'opérateur appuie (presse) sur la gâchette de sorte que le piton 30 est amené en position inactive.

La gâchette 20 est déplaçable, de préférence à coulissement, selon une direction inclinée par rapport à la direction de déplacement du piton 30. Selon un mode de réalisation illustré aux figures, la direction selon laquelle la gâchette 20 est déplaçable est sensiblement parallèle à l'axe d'introduction/sortie du maillon par rapport à la gorge.

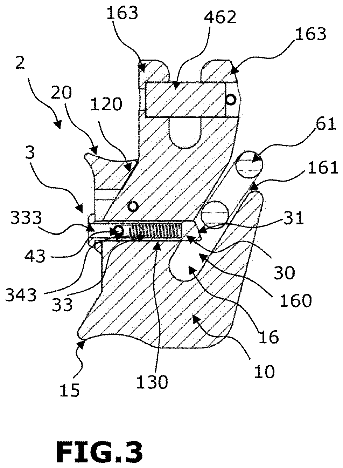

Dans l'exemple illustré aux figures, la gâchette 20 est rappelée par un ressort dans la première position qui correspond à une position haute de la gâchette 20. La position haute est considérée dans une configuration où le corps principal 10 est orienté de sorte que sa gorge 16 est ouverte vers le haut (comme visible par exemple sur la Figure 3).

Le piton 30 se retrouve ainsi en position inactive après avoir été entrainé par la gâchette 20 lorsque la gâchette atteint la deuxième position et tant que la gâchette est maintenue dans cette deuxième position. Comme expliqué ci-dessus, cette deuxième position de la gâchette correspond à une position pressée de la gâchette par l'opérateur. La pente 120 selon laquelle la gâchette 20 est déplacée permet de transmettre un effort au piton 30 qui présente une composante parallèle à l'axe du piton et dirigée vers l'extérieur du système d'accrochage 1, qui fait se déplacer le piton 30 à écartement de la gorge (en position inactive), ce qui libère le passage à l'intérieur de la gorge 16.

Selon le mode de réalisation illustré aux figures, La première position est une position haute écartée de l'ergot 15 présenté ci-après. Le système de gâchette comprend aussi de préférence une butée 42 de limitation de déplacement de la gâchette 20. La butée limite le déplacement de la gâchette dans le sens allant de la première position vers la deuxième position. Ladite butée de limitation est par exemple formée par une goupille 42. La gâchette 20 présente une fente 24 à travers laquelle s'étend la goupille 42. La buté de limitation est formée par coopération de la goupille 42 et d'une extrémité de la fente 24.

### Forme du corps principal

Le corps principal 10 comprend une partie, appelée ergot 15, dont la forme est adaptée pour permettre à l'opérateur de, avec une seule main, appuyer sur la gâchette 20 pour repousser le piton 30 en position inactive, en positionnant un doigt, par exemple le pouce, sous l'ergot 15, et un autre doigt, par exemple le majeur, sur la gâchette 20. La gâchette 20 est déplacée par appui de l'opérateur en direction de cet ergot 15 lorsqu'elle est déplacée de la première position vers la deuxième position.

Une telle conception de l'ergot 15 et de la gâchette 20, qui permet à l'opérateur de positionner un pouce d'une main sous le corps principal 10, en contact avec l'ergot 15, et un autre doigt de cette même main, tel que l'index, sur la gâchette 20 permet ainsi à l'opérateur de conserver son autre main libre pour saisir la chaine.

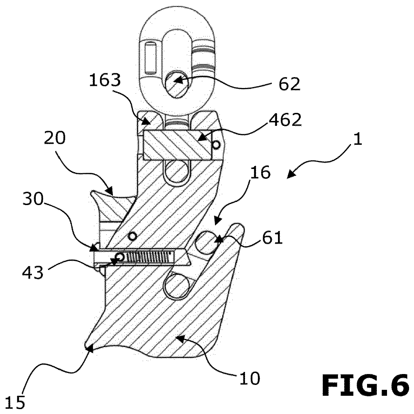

Selon un mode de réalisation illustré à la Figure 6, le corps principal 10 comprend aussi une chape de fixation qui inclut une gorge 162 supplémentaire définie entre deux oreilles 163 du corps principal 10. Un orifice traversant est ménagé dans chaque oreille 163 pour permettre le passage d'une goupille 462 permettant de réduire ou fermer le passage à l'intérieur de la gorge 162 pour emprisonner un autre maillon 62 de la chaine ou d'une autre chaîne par rapport au corps principal 10. La goupille 462 est retirable pour permettre de libérer ledit maillon 62. Préférentiellement, le système comprend un système de verrouillage, désactivable, permettant de verrouiller la goupille 462 en position de réduction ou fermeture du passage à l'intérieur de la gorge 162 supplémentaire.

Selon un autre mode de réalisation, le système d'accrochage peut comprendre un anneau ou oeil d'accrochage permettant d'accrocher un autre maillon de la même chaîne ou d'une autre chaîne. Selon la variante de réalisation illustrée à la Figure 2, la chape de fixation peut être remplacée par un tel anneau ou oeil d'accrochage.

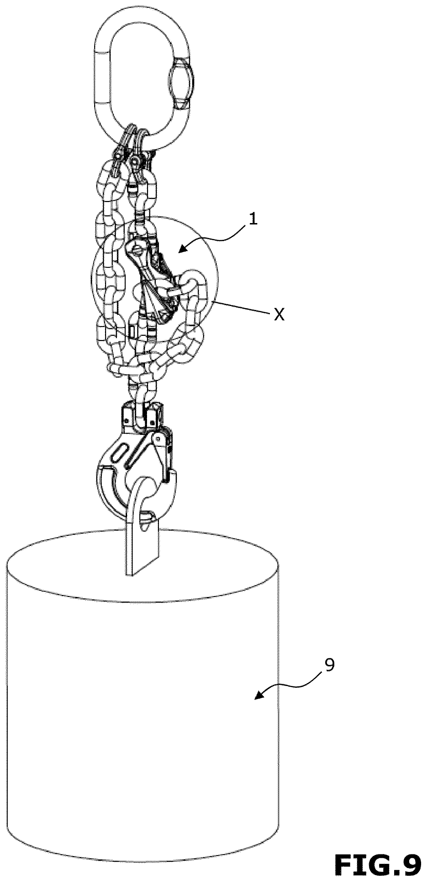

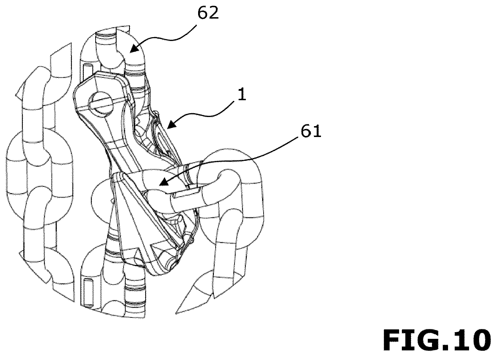

La Figure 9 et une vue en perspective du système décrochage selon un mode de réalisation, de l'invention, dans une configuration de levage selon laquelle un maillon d'une chaîne est accroché au système d'accrochage de manière à raccourcir la longueur utile de la chaîne, c'est-à-dire pour permettre de réduire la distance entre une charge suspendue à la chaîne et un élément autre que le système d'accrochage auquel est attaché l'autre extrémité de la chaîne. La figure 10, qui est une vue de détail de la zone X de la figure 9, montre le maillon de la chaîne prisonnier du système d'accrochage, le maillon de l'autre chaîne étant prisonnier dans la chape du système d'accrochage.

### Procédé d'accrochage

Le système d'accrochage présenté ci-dessus permet de mettre en oeuvre un procédé d'accrochage d'au moins un maillon 61 d'une chaine à l'aide dudit système d'accrochage.

Pour introduire le maillon 61 dans la gorge 16, le piton 30 est déplacé en position inactive. Le maillon rentre dans la gorge dans une position où l'ouverture du maillon 61 est située en regard du piton 30. Le déplacement du piton 30 en position inactive peut être commandé par appui sur la gâchette 20. Selon un mode de réalisation particulier, le déplacement du piton en position inactive est obtenu par appui du maillon 61 sur l'extrémité 31 du piton 30, de sorte que l'effort d'appui transmis au piton présente une composante qui permet de repousser le piton 30 dans le sens d'une libération du passage à l'intérieur de la gorge (c'est-à-dire un déplacement du piton 30 vers sa position inactive). Ainsi, l'effort d'introduction du maillon par l'opérateur permet à la fois de déplacer le piton 30 et d'introduire le maillon 61 dans la gorge.

Une fois qu'une partie du maillon a passé le piton 30, le piton est ramené en position active, de préférence par effort de rappel du ressort 33, à l'intérieur de l'ouverture du maillon de sorte que le maillon 61 est emprisonné par rapport à la gorge 16. En effet, le piton se repositionne dans l'ouverture du maillon derrière la partie du maillon qui vient de passer le piton.

Le système d'accrochage permet ainsi d'obtenir un verrouillage simple et automatique de la chaine lors de son insertion grâce à la configuration du système de verrouillage qui permet au maillon de repousser le piton de verrouillage vers sa position inactive, au cours de l'insertion du maillon dans la gorge.

L'ergonomie et en particulier l'agencement de la gâchette et de l'ergot, écartés l'un de l'autre, tout en étant situé d'un même côté par rapport à la gorge 16 du corps principal facilite l'utilisation à une main du système d'accrochage.

Préférentiellement, la gâchette est située, en position inactive, en partie médiane ou supérieure du corps principal et l'ergot est situé en partie inférieure du corps principal.

Préférentiellement, la gâchette et l'ergot présentent tous deux une zone d'appui de forme concave pour une meilleure préhension, ce qui permet d'actionner le déverrouillage par un mouvent de type pince.

Comme expliqué ci-dessous le système d'accrochage permet aussi un déverrouillage rapide et aisé par pression sur la gâchette.

### Procédé de libération

Le système d'accrochage présenté ci-dessus permet de mettre en oeuvre un procédé de libération d'au moins un maillon 61 d'une chaine, emprisonné dans une gorge 16 dudit système d'accrochage.

En appuyant sur la gâchette 20, l'opérateur entraine le déplacement du piton 30 en position inactive, ce qui autorise la sortie du maillon 61 par rapport à la gorge 16.

La ou chaque chaîne utilisée peut être une chaine de levage ou d'arrivage. La ou chaque chaîne peut être de type à maillons courts, par exemple de grade 80,100 ou 120.

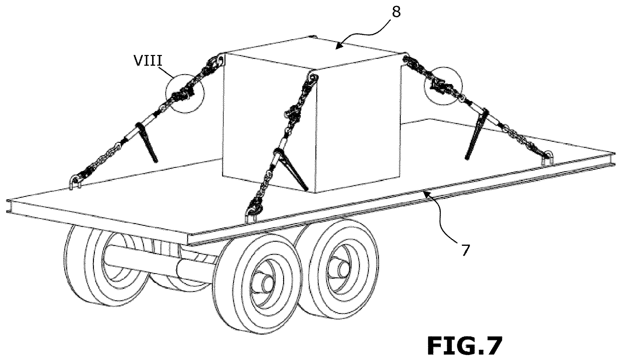

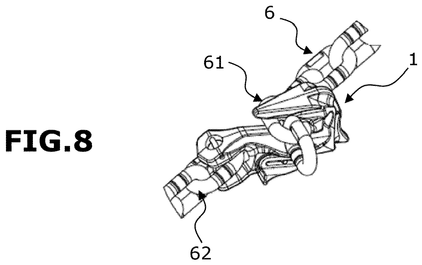

Le système d'accrochage peut être utilisé pour une application d'arrimage, par exemple pour l'arrimage d'une charge 8 sur une remorque 7, comme illustré aux Figures 7 et 8, ou de levage d'une charge 9 comme illustré aux Figures 9 et 10.

L'invention n'est pas limitée aux modes de réalisation illustrés dans les dessins.

De plus, le terme « comprenant » n'exclut pas d'autres éléments ou étapes.

## Revendications

1. Système (1) d'accrochage pour une chaine (6) à maillons (61), le système (1) d'accrochage comprenant :
- un corps principal (10) présentant une gorge (16) apte à recevoir un maillon (61) d'une chaine (6) ; et
- un mécanisme (3) de verrouillage, comprenant un élément (30), appelé piton de verrouillage, déplaçable entre une position inactive dans laquelle le passage (160) à l'intérieur de la gorge (16) est libéré pour permettre une introduction ou une sortie du maillon (61) par rapport à la gorge (16), et une position active dans laquelle le piton (30) de verrouillage réduit ou ferme le passage (160) à l'intérieur de la gorge (16) pour permettre d'emprisonner le maillon (61) par rapport à la gorge (16),
le système (1) d'accrochage comprenant aussi un système (2) de gâchette comprenant une gâchette (20) qui est couplée au piton (30) de verrouillage, la gâchette (20) étant manuellement actionnable pour entrainer le piton (30) en position inactive,
**caractérisé en ce que** l'extrémité (31) du piton (30) de verrouillage située du côté de la gorge (16) présente une face inclinée par rapport à l'axe de déplacement du piton (30) de manière à former une rampe, de sorte qu'un appui du maillon (61) sur la rampe lors de son introduction dans la gorge (16), depuis l'ouverture (161) de la gorge (16) vers le fond de la gorge (16), permet de déplacer le piton (30) en position inactive, par coulissement du piton (30) à l'intérieur d'un passage (130) traversant ménagé dans le corps principal (10), pour libérer le passage (160) à l'intérieur de la gorge (16).

2. Système (1) selon la revendication 1, dans lequel la gâchette (20) est, lors de son actionnement manuel, déplaçable selon une direction inclinée par rapport à la direction de déplacement du piton (30).

3. Système (1) selon l'une quelconque des revendications précédentes, dans lequel une lumière (343) est ménagée dans le piton (30), et le système (1) comprend une goupille (43) qui s'étend dans le corps principal (10) et dans ou à travers ladite lumière (343) pour former une butée de limitation de déplacement du piton et, de préférence, empêcher une rotation du piton (30) autour de son axe.

4. Système (1) selon l'une quelconque des revendications précédentes, dans lequel le système comprend un ressort (33) de rappel configuré pour rappeler le piton (30) en position active.

5. Système (1) selon l'une quelconque des revendications précédentes, dans lequel le système (2) de gâchette comprend un ressort (21) de rappel permettant de rappeler la gâchette (20) dans la première position.

6. Système selon l'une quelconque des revendications précédentes, dans lequel le système (1) comprend une butée (42) de limitation de déplacement de la gâchette (20).

7. Système (1) selon l'une quelconque des revendications précédentes, dans lequel le corps principal comprend une partie, appelée ergot (15), dont la forme est adaptée pour permettre à l'opérateur de, avec une seule main, appuyer sur la gâchette (20), en positionnant un doigt, par exemple le pouce, sous l'ergot (15), et en positionnant un autre doigt, par exemple le majeur, sur la gâchette (20).

8. Procédé d'accrochage d'au moins un maillon (61) d'une chaine à l'aide d'un système d'accrochage (1) selon l'une quelconque des revendications 1 à 7, le procédé comprend les étapes suivantes
- déplacement du piton (30) en position inactive et introduction d'un maillon (61) dans la gorge (16), l'ouverture du maillon (61) étant située en regard du piton (30) ; et
- déplacement du piton (30) en position active pour l'emprisonnement du maillon (61) par rapport à la gorge (16).

9. Procédé de libération d'au moins un maillon (61) d'une chaine, emprisonné dans une gorge (16) d'un système (1) d'accrochage (1) selon l'une quelconque des revendications 1 à 7, le procédé comprend le déplacement du piton (30) en position inactive à l'aide de la gâchette (20), et la sortie du maillon (61) par rapport à la gorge (16).

## Patentansprüche

1. Einhängesystem (1) für eine Kette (6) mit Gliedern (61), das Einhängesystem (1) umfassend:
- einen Hauptkörper (10), der eine Nut (16) aufweist, die geeignet ist, um ein Glied (61) einer Kette (6) aufzunehmen; und
- einen Verriegelungsmechanismus (3), umfassend ein Element (30), das als Verriegelungsstift bezeichnet wird und zwischen einer inaktiven Position, in der der Durchgang (160) innerhalb der Nut (16) freigegeben ist, um ein Einführen oder Herausziehen des Glieds (61) in Bezug auf die Nut (16) zu ermöglichen, und einer aktiven Position, in der der Verriegelungsstift (30) den Durchgang (160) innerhalb der Nut (16) verringert oder schließt, um ein Einschließen des Glieds (61) in Bezug auf die Nut (16) zu ermöglichen, beweglich ist;
das Einhängesystem (1) auch umfassend ein Zuhaltungssystem (2) umfassend eine Zuhaltung (20), die mit dem Verriegelungsstift (30) gekoppelt ist, wobei die Zuhaltung (20) manuell betätigt werden kann, um den Stift (30) in die inaktive Position anzutreiben, **dadurch gekennzeichnet, dass** das auf der Seite der Nut (16) befindliche Ende (31) des Verriegelungsstifts (30) eine Fläche aufweist, die in Bezug auf die Bewegungsachse des Stifts (30) geneigt ist, um eine Rampe zu bilden, sodass eine Abstützung des Kettenglieds (61) auf der Rampe bei seiner Einführung in die Nut (16), von der Öffnung (161) der Nut (16) in Richtung des Bodens der Nut (16), es ermöglicht, den Stift (30) in die inaktive Position zu verschieben, indem der Stift (30) im Inneren eines im Hauptkörper (10) vorgesehenen Durchgangs (130) gleitet, um den Durchgang (160) im Inneren der Nut (16) freizugeben.

2. System (1) nach Anspruch 1, wobei die Zuhaltung (20) bei ihrer manuellen Betätigung in eine Richtung verschiebbar ist, die in Bezug auf die Bewegungsrichtung des Stifts (30) geneigt ist.

3. System (1) nach einem der vorherigen Ansprüche, wobei in dem Stift (30) ein Lumen (343) gebildet ist und das System (1) einen Splint (43) umfasst, der sich in den Hauptkörper (10) und in das oder durch das Lumen (343) erstreckt, um einen Begrenzungsanschlag für eine Verschiebung des Stifts zu bilden und vorzugsweise eine Drehung des Stifts (30) um seine Achse zu verhindern.

4. System (1) nach einem der vorherigen Ansprüche, wobei das System eine Rückholfeder (33) umfasst, die konfiguriert ist, um den Stift (30) in die aktive Position zurückzuholen.

5. System (1) nach einem der vorherigen Ansprüche, wobei das Zuhaltungssystem (2) eine Rückholfeder (21) umfasst, die es ermöglicht, die Zuhaltung (20) in die erste Position zurückzuholen.

6. System nach einem der vorherigen Ansprüche, wobei das System (1) einen Anschlag (42) zur Begrenzung einer Bewegung der Zuhaltung (20) umfasst.

7. System (1) nach einem der vorherigen Ansprüche, wobei der Hauptkörper einen als Nase (15) bezeichneten Abschnitt aufweist, dessen Form angepasst ist, um dem Bediener zu ermöglichen, mit einer Hand die Zuhaltung (20) zu betätigen, indem er einen Finger, z. B. den Daumen, unter der Nase (15) positioniert und einen anderen Finger, z. B. den Mittelfinger, auf der Zuhaltung (20) positioniert.

8. Verfahren zum Einhängen mindestens eines Glieds (61) einer Kette mittels eines Einhängesystems (1) nach einem der Ansprüche 1 bis 7, das Verfahren umfassend die folgenden Schritte
- Verschieben des Stifts (30) in die inaktive Position und Einführen eines Glieds (61) in die Nut (16), wobei sich die Öffnung des Glieds (61) gegenüber dem Stift (30) befindet; und
- Verschieben des Stifts (30) in die aktive Position, um das Glied (61) in Bezug auf die Nut (16) einzuklemmen.

9. Verfahren zum Freigeben mindestens eines Glieds (61) einer Kette, das in einer Nut (16) eines Systems (1) zum Einhängen (1) nach einem der Ansprüche 1 bis 7 eingeklemmt ist, wobei das Verfahren ein Verschieben des Stifts (30) in die inaktive Position mittels der Zuhaltung (20) und das Herausziehen des Glieds (61) in Bezug auf die Nut (16) umfasst.

## Claims

1. An attachment system (1) for a chain (6) with links (61), the attachment system (1) comprising:
- a main body (10) having a groove (16) able to receive a link (61) of a chain (6); and
- a locking mechanism (3), comprising an element (30), called a lock post, movable between an inactive position in which the passage (160) inside the groove (16) is freed to allow introduction or removal of the link (61) relative to the groove (16), and an active position in which the lock post (30) reduces or closes the passage (160) inside the groove (16) to make it possible to capture the link (61) relative to the groove (16);
the attachment system (1) also comprising a trigger system (2) comprising a trigger (20) which is coupled to the lock post (30), the trigger (20) being able to be actuated manually to drive the post (30) to the inactive position,
**characterized in that** the end (31) of the lock post (30) situated on the side of the groove (16) has an inclined face relative to the movement axis of the post (30) so as to form a ramp, such that bearing of the link (61) on the ramp (61) when it is introduced into the groove (16), from the opening (161) of the groove (16) toward the bottom of the groove (16), makes it possible to move the post (30) to the inactive position, by sliding of the post (30) inside a through passage (130) arranged in the main body (10), to free the passage (160) inside the groove (16).

2. The system (1) according to claim 1, wherein the trigger (20) is, during manual actuation thereof, movable in an inclined direction relative to the movement direction of the post (30).

3. The system (1) according to any one of the preceding claims, wherein an aperture (343) is arranged in the post (30), and the system (1) comprises a pin (43) which extends in the main body (10) and in or through said aperture (343) to form a stop limiting the movement of the post and, preferably, to prevent the rotation of the post (30) about its axis.

4. The system (1) according to any one of the preceding claims, wherein the system comprises a return spring (33) configured to return the post (30) to the active position.

5. The system (1) according to any one of the preceding claims, wherein the trigger system (2) comprises a return spring (21) making it possible to return the trigger (20) to the first position.

6. The system according to any one of the preceding claims, wherein the system (1) comprises a stop (42) limiting the movement of the trigger (20).

7. The system (1) according to any one of the preceding claims, wherein the main body comprises a part, called lug (15), the shape of which is adapted to allow the operator to press on the trigger (20) with a single hand by positioning a finger, for example the thumb, below the lug (15), and by positioning another finger, for example the middle finger, on the trigger (20).

8. A method for attaching at least one link (61) of a chain using an attachment system (1) according to any one of claims 1 to 7, the method comprises the following steps:
- moving the post (30) to the inactive position and introducing a link (61) into the groove (16), the opening of the link (61) being situated opposite the post (30); and
- moving the post (30) to the inactive position to capture the link (61) relative to the groove (16).

9. A method for freeing at least one link (61) of a chain, captured in a groove (16) of an attachment (1) system (1) according to any one of claims 1 to 7, the method comprises moving the post (30) to the inactive position using the trigger (20), and removing the link (61) relative to the groove (16).
